(19) Europäisches Patentamt
European Patent Office
Office européen des brevets

(11) Numéro de publication: **0 341 126 A1**

(12) **DEMANDE DE BREVET EUROPEEN**

(21) Numéro de dépôt: **89401155.0**

(22) Date de dépôt: **24.04.89**

(51) Int. Cl.[4]: **B 01 F 17/00**
A 01 N 25/04, A 01 N 25/30,
C 07 F 9/09

(30) Priorité: **04.05.88 FR 8805966**

(43) Date de publication de la demande:
**08.11.89 Bulletin 89/45**

(84) Etats contractants désignés:
**AT BE CH DE ES FR GB GR IT LI LU NL SE**

(71) Demandeur: **RHONE-POULENC CHIMIE**
**25, quai Paul Doumer**
**F-92408 Courbevoie Cédex (FR)**

(72) Inventeur: **Girardeau, Yvette**
**65 Montée de la Sarra Fontaines Saint Martin**
**F-69270 Fontaines/S/Saône (FR)**

**Ruffo, Georges**
**40, route de l'Espra Charly**
**F-69390 Vernaison (FR)**

**Segaud, Christian**
**33, rue Jean de la Fontaine**
**F-69280 Chassieu (FR)**

(74) Mandataire: **Fabre, Madeleine-France et al**
**RHONE-POULENC CHIMIE Service Brevets Chimie 25, quai Paul Doumer**
**F-92408 Courbevoie Cédex (FR)**

(54) **Compositions tensio-actives à base d'esters phosphoriques de poly(phényl-1 éthyl)phénols polyoxyalcoylénés, leur procédé de préparation et leur application à l'obtention de dispersions aqueuses de matières actives.**

(57) Compositions tensio-actives constituées d'esters phosphoriques de di et/ou tri(phényl-1 éthyl) phénols portant des motifs polyoxyéthylénés et polyoxypropylénés statistiquement répartis et terminés par un motif oxyéthyléné.

Elles sont obtenues par phosphatation desdits di et/ou tri(phényl-1 éthyl) phénols polyoxyalcoylénés.

Elles peuvent être utilisées pour la formulation de matières actives insolubles dans l'eau, notamment phytosanitaires, sous forme de dispersions aqueuses fluides, granulés ou poudres mouillables.

EP 0 341 126 A1

**Description**

## COMPOSITIONS TENSIO-ACTIVES A BASE D'ESTERS PHOSPHORIQUES DE POLY (PHENYL-1 ETHYL) PHENOLS POLYOXYALCOYLENES, LEUR PROCEDE DE PREPARATION ET LEUR APPLICATION A L'OBTENTION DE DISPERSIONS AQUEUSES DE MATIERES ACTIVES

La présente invention a pour objet une composition tensio-active à base d'esters phosphoriques de poly (phényl-1 éthyl) phénols polyoxyalcoylénés, son procédé de préparation et son application à l'obtention de dispersions aqueuses fluides de matières actives solides ou liquides appelées "flowable" qui sont ensuite diluées lors de leur application, de poudres mouillables ou de granulés qui sont ensuite mis en dispersion aqueuse.

Il est connu d'utiliser les mono- et diesters phosphoriques de poly (phényl-1 éthyl) phénols polyoxyéthylénés sous forme acide ou neutralisée pour la préparation de "flowable" (brevet anglais n° 2.115.284 et allemand n° 3.302.648).

La Demanderesse a trouvé une nouvelle composition tensio-active permettant de diminuer la viscosité des "flowable" à concentration identique en matière active.

Les compositions tensio-actives faisant l'objet de l'invention à base d'esters phosphoriques de poly(phényl-1 éthyl) phénols polyoxyalcoylénés sont caractérisées en ce qu'elles sont constituées d'un mélange de mono- et de di-esters phosphoriques de poly (phényl-1 éthyl) phénols polyoxyalcoylénés et de poly (phényl-1 éthyl) phénols polyoxyalcoylénés, de formules I à III suivantes :

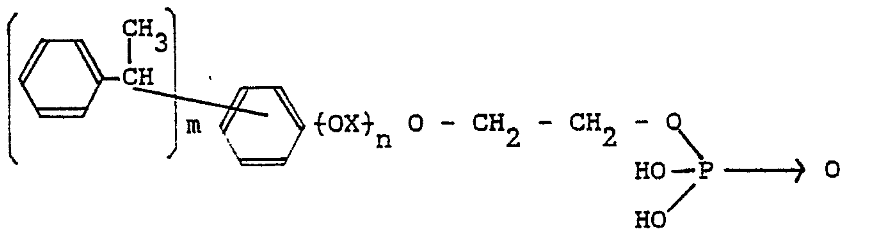
(I)

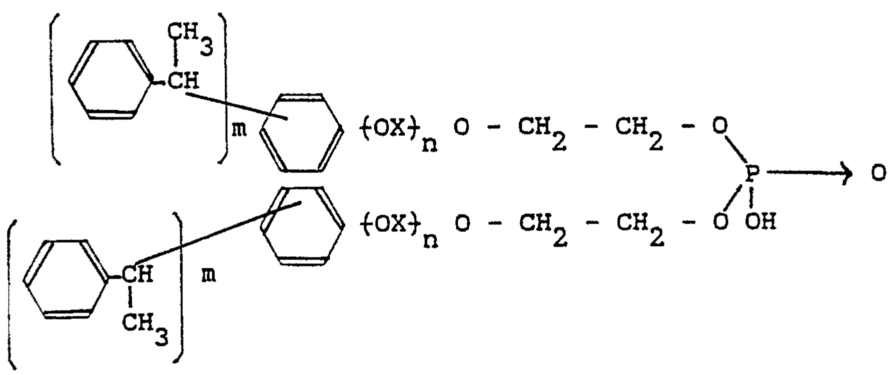
(II)

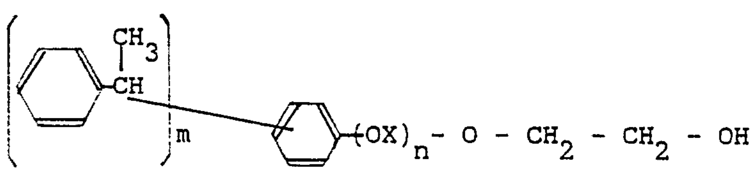
(III)

formules dans lesquelles :

. m est égal à 2 ou 3 ;

. $(OX)_n$ représente une succession statistique de motifs oxyéthylénés et oxypropylénés ;

. n étant tel que le nombre total de motifs oxyalcoylénés du radical $\{OX\}_n\ O - CH_2 - CH_2 -$ soit de 14 à 35, avec un rapport nombre de motifs oxyéthylénés / nombre de motifs oxypropylénés allant de 40/60 à 70/30, de préférence de 40/60 à 60/40; lesdits esters de formules I et II se présentant sous forme acide ou neutralisée.

Les quantités respectives des différents constituants correspondent à environ à :

- 0 à 70 % en poids, de préférence de 5 à 60 % en poids, de constituant de formule III
- un rapport pondéral diester de formule II / monoester de formule I allant de :

. 0 à 18, de préférence de 0,3 à 15 lorsque lesdits esters sont sous forme acide

. 0 à 10, de préférence de 0,3 à 5 lorsque lesdits esters sont sous forme neutralisée.

Une composition tout particulièrement performante est constituée de constituants de formules I à III dans

lesquelles :
. m est égal à 3
. n est égal à 16
. le rapport nombre de motifs oxyéthylénés / nombre de motifs oxypropylénés est de 50/50.

Les compositions tensio-actives faisant l'objet de l'invention peuvent être obtenues par phosphatation d'au moins un poly (phényl-1 éthyl) phénol polyoxyalcoylèné de formule III donnée ci-dessus, selon des méthodes bien connues.

Un procédé de phosphatation particulièrement favorable consiste à réaliser deux étapes :
- une étape de phosphatation proprement dite réalisée par introduction en continu de l'anhydride phosphorique au sein d'un milieu soumis à un régime turbulent d'agitation, milieu constitué par ledit dérivé polyoxyalkylèné de formule III contenant de l'eau en quantité suffisante pour initier la réaction de phosphatation, à une température de l'ordre de 35-40°C en début de réaction, ladite température étant maintenue à une température inférieure ou égale à 45°C jusqu'en fin d'introduction de l'anhydride phosphorique, la quantité totale d'anhydride phosphorique mise en oeuvre correspondant à un rapport molaire dérivé polyoxyalkylèné / $P_2O_5$ égal à 3 ± 0,3
- suivie d'une étape de mûrissement du milieu réactionnel obtenu, réalisée en régime turbulent d'agitation à une température comprise entre 40 et 60°C.

La quantité d'eau présente dans le dérivé polyoxyalkylèné est celle juste nécessaire pour initier la réaction de phosphatation, l'eau formée en cours de réaction étant suffisante pour entretenir ladite réaction ; cette quantité d'eau à mettre en oeuvre est généralement de l'ordre de 0,0025 à 0,05 mole par mole de dérivé polyoxyalkylèné.

La température maintenue pendant l'étape de phosphatation doit être suffisante pour obtenir un milieu de viscosité suffisamment basse pour être soumis à un régime turbulent d'agitation mais ne doit pas dépasser 45°C, la température pendant l'étape de mûrissement devant être maintenue entre 40 et 60°C.

L'ensemble de l'opération de phosphatation peut être réalisé à pression atmosphérique ; la première étape peut durer de 1 à 6 heures et la seconde de 30 mn à 2 heures.

La présente invention a également pour objet des compositions tensio-actives obtenues par neutralisation des fonctions acides des compositions tensio-actives à base d'au moins un mélange de monoester phosphorique de formule I, de diester phosphorique de formule II et de composé non-ionique de formule III.

Cette opération de neutralisation des fonctions acides peut être réalisée à l'aide d'une base en quantité suffisante pour obtenir une composition présentant un pH d'au moins 7 et généralement de l'ordre de 7,5 à 8.

Parmi les bases pouvant être mises en ouvre on peut citer :
- les hydroxydes alcalins (soude, potasse ...)
- les amines (diéthanolamine, triéthanolamine, morpholine, N-méthylcyclohexylamine ...).

Cette opération étant exothermique, elle est réalisée sous agitation turbulente à une température telle que celle du milieu ne dépasse pas 60°C ; industriellement celle-ci est réalisée à une température de l'ordre de 45°C et dure généralement de 1/4 d'heure à 3/4 d'heure environ.

Les poly (phényl-1 éthyl) phénols polyoxyalcoylénés de formule III mis en oeuvre peuvent être obtenus selon des méthodes connues par addition simultanée de monoéthylène glycol et de monopropylène glycol à un poly(phényl-1 éthyl)phénol avec addition finale d'une mole de monoéthylène glycol, les quantités respectives de monoéthylène glycol et de monopropylène glycol étant déterminées par le rapport nombre de motifs oxyéthylénés / nombre de motifs oxypropylénés préalablement choisi. Cette opération dure généralement de 20 à 40 minutes à 140-180°C, en présence de 0,5 à 15 % en poids par rapport au produit fini d'une base alcaline telle que la soude comme catalyseur, les quantités de monoalkylèneglycols et de poly(phényl-1 éthyl)phénol étant stoechiométriques.

La composition tensio-active de l'invention est particulièrement bien adaptée à la formulation de matières actives insolubles dans l'eau ou difficilement solubles dans l'eau nécessitant une mise en suspension lors de leur application.

La ou les matières actives doivent, comme mentionné, être insolubles dans l'eau ou difficilement solubles dans l'eau à la température ambiante qui est le plus souvent comprise entre 15 et 25°C.

Par l'expression "difficilement soluble", on entend une solubilité inférieure à 1 % en poids.

A titre de matières actives susceptibles d'être formulées selon l'invention, on peut citer les pigments et charges, les colorants, les azurants optiques ou divers additifs dans diverses industries tels que les matières plastiques, les peintures, le textile, le béton, la cosmétique, la pharmacie, etc...

Un domaine privilégié d'application de l'invention est la phytopharmacie et plus spécialement la formulation des matières actives telles que les insecticides, acaricides, les fongicides et leurs diverses associations, les herbicides, les nématicides, les molluscicides, les attractifs, les répulsifs, les rodenticides.

Comme exemples d'insecticides convenant à l'invention, on peut citer ceux qui appartiennent aux familles :
- des organo-halogénés ou chlorés ;
- des carbinols ;
- des organophosphorés ;
- des sulfones et sulfonates ;
- des carbamates ;
- des benzoyl urées ;
- les pyrethrinoides de synthèse.

Les fongicides susceptibles d'être mis en oeuvre dans l'invention peuvent être choisis parmi :
- les carbamates ;
- les dérivés du benzène ;
- les dérivés du phénol ;
- les quinones ;
- les dicarboximides ;
- les amines, les amides ;
- les diazines
- les sulfamides et dérivés soufrés ;
- les guanidines ;
- les composés hétérocycliques ;
- les monoéthyl phosphites métalliques ;
- les organostanniques.

A titre de substances chimiques présentant des propriétés herbicides, on peut faire appel à celles qui se retrouvent dans les familles chimiques suivantes :
- les composés phénoliques ;
- les carbamates ;
- les urées substituées ;
- les diazines ;
- les triazines ;
- les amides ;
- les ammoniums quaternaires ;
- les benzonitriles ;
- les toluidines ;
- les triazoles et autres.

Un mode d'application particulièrement intéressant de la composition tensio-active faisant l'objet de l'invention réside dans la formulation d'au moins une matière active solide sous forme de dispersions aqueuses fluides appelées "Flowable".

La matière active choisie présente un point de fusion supérieur à 65° C et de préférence supérieur à 100° C et ne doit pas être sensible à l'hydrolyse.

Lesdites dispersions contiennent en milieux aqueux :
- au moins une matière active solide
- la composition tensio-active de l'invention et éventuellement un ou plusieurs autre(s) tensio-actif(s) anionique(s) ou non-ionique(s) usuels dans ce type d'application
- au moins un anti-gel
- éventuellement un agent mouillant
- éventuellement un agent épaississant
- et des adjuvants divers.

La composition tensio-active de l'invention présente en elle-même un pouvoir mouillant ; de ce fait la présence d'un agent mouillant n'est pas indispensable ; si toutefois la présence d'un tel agent est désirée, celui-ci pourra être choisi par les suivants :
- les savons de métaux alcalins tels que les sels de sodium ou de potassium d'acides gras saturés ou insaturés en $C_8$-$C_{24}$, le N-lauryl sarcosinate de sodium, le N-acylsarcosinate de sodium
- les sulfonates alcalins tels que les alcoylsulfonates du type diéthylhexylsulfosuccinate de sodium ; les alcoylbenzène sulfonates du type nonyl- ou dodécyl-benzènesulfonates de sodium, de diéthanolamine, de triéthanolamine ou de N-méthylcyclohexylamine ; les alcoylnaphtalène sulfonates alcalins ; les N-alcoyltaurates alcalins
- les sulfates et les produits sulfatés tels que les alcoylsulfates alcalins du type laurylsulfate de sodium ; les alcools gras polyoxyéthylénés et sulfatés ; les alcoylphénols polyoxyéthylénés et sulfatés.

Les anti-gels ont pour but d'éviter la formation éventuelle de cristaux lors du stockage des dispersions ; des anti-gels conventionnels tels que l'éthylène glycol, le propylène, le glycérol, le diéthylène glycol, le triéthylène glycol, le tétraéthylène glycol, l'urée ... peuvent être utilisés.

Des agents épaississants sont préférentiellement mis en oeuvre et ce dans le but de maintenir en suspension la matière active et d'éviter toute sédimentation au stockage ; des agents épaississants organiques hydrosolubles ou susceptibles de gonfler dans l'eau tels que les polysaccharides du type gomme xanthane, les alginates, les méthylcelluloses carboxylées ou hydroxylées, les macromolécules synthétiques du type polyacrylates, polymaléates, polyvinylpyrrolidones, polyéthylène glycols, alcools polyvinyliques.. ou non organiques tels que les bentonites, les silices... peuvent être utilisés.

Les additifs auxiliaires pouvant être mis en oeuvre sont des agents anti-moussants (polysiloxanes par exemple), des agents protecteurs vis-à-vis de l'oxydation, des rayons UV ou des variations de pH, des colorants, des bactéricides, des adjuvants destinés à modifier l'adhésion de la bouillie de traitement sur le végétal.

Les proportions pondérales des différents constituants des dispersions sont généralement les suivantes :
- de 10 à 89 % d'eau
- de 10 à 65 % de matière(s) active(s)

- de 0,2 à 20 % de composition tensio-active de l'invention
- de 0,8 à 20 % d'anti-gel
- de 0 à 10 % d'agent mouillant
- de 0 à 5 % d'épaississant.

Lesdites dispersions aqueuses pouvant être obtenues d'une manière connue, par exemple par mise en solution de la composition tensio-active dans de l'anti-gel et de l'eau puis mise en dispersion sous forte agitation de la matière active dans la solution, broyage jusqu'à obtenir une taille de particules de l'ordre de 1 à 10 microns, puis dégazage .

Les dispersions ainsi obtenues présentent les propriétés suivantes:
- une très bonne stabilité au stockage
- une teneur élevée en matière active
- une viscosité faible
- une bonne stabilité lorsqu'elle est diluée dans l'eau à la dose d'emploi, et ce pendant la durée de l'application.

Un deuxième mode d'application de la composition tensio-active faisant l'objet de l'invention réside dans la formulation d'au moins une matière active sous forme de microgranulés.

Si la matière active se trouve à l'état liquide, elle peut être absorbée sur un support pulvérulent tel que des silicates de calcium, des silices précipitées à haut pouvoir absorbant (par exemple le ZEOSIL 39 A de RHONE-POULENC) mises en quantité suffisante pour obtenir une poudre sèche.

Les microgranulés réalisés selon l'invention comprennent :
- au moins une matière active
- la composition tensio-active faisant l'objet de l'invention et éventuellement un ou plusieurs autre(s) tensio-actif(s) usuel(s) dans ce type d'application
- un agent liant
- éventuellement un agent mouillant
- éventuellement une charge
- éventuellement un agent désintégrant
- et éventuellement des produits auxiliaires.

Les proportions pondérales des différents constituants sont généralement les suivantes :
- de 10 à 95 % de matière(s) active(s)
- de 3 à 10 % de composition tensio-active de l'invention
- de 2 à 10 % de liant
- de 0 à 75 % de charge(s)
- de 0 à 5 % d'agent(s) mouillant(s)
- de 0 à 5 % d'agent(s) désintégrant(s).

Parmi les liants pouvant être mis en oeuvre on peut citer :
- les copolymères obtenus à partir d'un acide carboxylique insaturé et d'un composé α-oléfinique et/ou d'un composé vinylique tels que les copolymères anhydride maléïque- diisobutylène vendus par les Sociétés RHONE-POULENC ou GERONAZZO sous les dénominations commerciales SOPROPON T 36, SOPROPON T 36 K ou GEROPON TA 72.
- les copolymères carboxyliques tels que les acides polyacriliques vendus par RHONE-POULENC sous la dénomination DISPERSANT DG ou DA.
- les polynaphtalène sulfonates, les polyalkylnaphtalène sulfonates vendus par RHONE-POULENC sous la dénomination SUPRAGIL NS 90 ou MNS 90 ou par GERONAZZO sous la dénomination GEROPON RM 210.

Parmi les tensio-actifs pouvant être présents à côté de la composition tensio-active de l'invention, on peut citer les dérivés polyoxyéthylénés et/ou polyoxypropylénés des alcools aliphatiques, les amides gras éventuellement polyoxyéthylénés.

Les agents mouillants pouvant éventuellement être présents sont ceux déjà cités ci-dessus.

Parmi les charges pouvant être mises en oeuvre on peut citer des composés inertes naturels broyés tels que kaolin, attapulgite, bentonite, craie, talc.. ou des produits synthétiques tels que la silice de précipitation, de combustion, le carbonate de calcium...

Les agents désintégrants ont pour fonction d'aider la libération de la matière active et peuvent être de la bentonite, de la fécule de maïs ou des sels minéraux très solubles tels que le bicarbonate de sodium, les chlorure de sodium...

Les produits auxiliaires sont plus spécialement :
- des agents anti-moussants tels que ceux du type polysiloxanes
- des agents anti-mottants du type silice précipitée
- des agents anti-statiques tels que le chlorure de lithium, le sel de potassium de l'acide tridécylphosphorique
- des agents protecteurs vis-à-vis de l'oxydation, des UV ou des variations de pH
- des additifs divers tels que colorants ou adjuvants destinés à modifier l'adhésion de la bouillie de traitement sur le végétal.

Lesdits granulés peuvent être préparés selon les méthodes de granulation ou d'agglomération connues, par exemple en lit fluidisé, par atomisation si la température de fusion de la matière active le permet, sur plateau tournant, par extrusion...

La taille des granulés obtenus peut varier dans d'assez larges mesures entre 100 à 500 microns ou entre 0,1 et 2 mm selon la méthode de granulation utilisée.

Les granulés ainsi obtenus présentent les propriétés suivantes :
- très bonne dispersibilité dans l'eau
- bonne résistance à la manipulation sans formation de poussière
- teneur élevée en matière active
- bonne stabilité physico-chimique
- bonne fluence.

Une autre application de la composition tensio-active de l'invention réside dans son utilisation pour la formulation des matières actives précitées sous forme de poudres mouillables.

Les poudres mouillables réalisées selon l'invention sont composées généralement de :
- au moins une matière active
- au moins la composition tensio-active de l'invention
- éventuellement une charge
- et éventuellement des produits auxiliaires.

La matière active dont la nature a été précisée précédemment se trouve sous forme solide ou liquide.

La matière active solide est le plus souvent soumise à un broyage afin de l'amener à la granulométrie souhaitée qui est telle que 95 % en poids des particules ont un diamètre apparent inférieur à 20 µm et que le diamètre moyen est compris entre 2 et 10 µm. On définit le diamètre moyen comme étant un diamètre tel que 50 % en poids des particules ont un diamètre supérieur ou inférieur au diamètre moyen.

Il faut tenir compte du point de fusion pour le choix du procédé de broyage : le broyage à jet d'air étant préférable dans le cas des matières actives à bas point de fusion ( $< 150°C$). Ce point de fusion a également une influence sur la concentration possible en matières actives. Celle-ci peut être d'autant plus élevée que le point de fusion est haut.

Si la matière active se trouve à l'état liquide, il est tout à fait possible de l'absorber sur support pulvérulent pour avoir une présentation solide.

On choisit de préférence des silices précipitées à haut pouvoir absorbant (par exemple le ZEOSIL 39 A de RHONE-POULENC) mises en quantité suffisante pour obtenir une poudre sèche ou bien des silicates de calcium.

Les charges sont des composés inertes qui peuvent servir :
- soit de support de la matière active et de la composition tensio-active de l'invention si elles sont liquides
- soit d'agent de dilution de la matière active.

Ce sont des produits naturels broyés tels que le kaolin, attapulgite, bentonite, craie, talc ou des produits synthétiques comme la silice de précipitation, de combustion, le carbonate de calcium, etc..

Pour le choix des charges on devra tenir compte des caractéristiques suivantes :

. finesse : cette caractéristique a une très grande influence sur la teneur en suspension et la fluence

. pH : il est important que le pH de la charge soit adapté à la matière active dont la stabilité est souvent dépendante de ce facteur.

. teneur en eau libre : il y a le plus souvent intérêt à ce que cette teneur soit la plus faible possible, la dégradation des matières actives étant généralement favorisée par la présence d'eau.

. propriété antimottante : cette propriété est particulièrement importante pour les poudres mouillables à haute concentration ou obtenues à partir de matières actives à bas point de fusion.

. prix : ce facteur est évidemment d'autant plus important que la formule est moins concentrée en matières actives.

Les produits auxiliaires pouvant être mis en oeuvre sont les agents anti-moussants, anti-mottants, anti-statiques, protecteurs et additifs divers déjà cités ci-dessus.

Dans le cas de matières actives particulièrement hydrophobes, il est conseillé d'adjoindre un agent mouillant du type de ceux déjà décrits ci-dessus.

Les différents constituants précités interviennent dans les poudres mouillables dans des proportions qui peuvent être variables :
- de 10 à 90 % de matière(s) active(s)
- de 0,5 à 20 % de la composition tensio-active de l'invention
- de 9,5 à 75 % de charge(s)
- de 0 à 5 % d'agent(s) mouillant(s)
- de 0 à 5 % de produit(s) auxiliaire(s).

Le mode de fabrication des poudres mouillages diffère selon que la matière active est solide ou liquide.

Lorsque la matière active est solide, on va la mélanger avec les autres constituants tels que composition tensio-active de l'invention, agent mouillant que l'on absorbera préalablement sur une charge absorbante s'ils sont liquides.

On peut ajouter dans le mélange une charge de dilution et éventuellement des produits auxiliaires. Les différents constituants peuvent être ajoutés simultanément ou consécutivement, il n'y a aucun ordre critique.

La durée du mélange est fonction de l'appareil utilisé et sera aisément déterminée par l'homme de métier de telle sorte qu'il obtienne un mélange homogène.

L'opération de mélange peut être effectuée dans un mélangeur à poudres de type connu : mélangeurs à chute libre du type tambour, mélangeurs verticaux ou horizontaux à vis hélicoïdale, mélangeurs planétaires.

Quand la matière active est liquide, on effectue sa pulvérisation sur une charge absorbante. Il peut être intéressant de chauffer légèrement cette matière active si sa viscosité est élevée à température ambiante.

On ajoute ensuite la composition tensio-active et l'agent mouillant simultanément avec la matière active.

On peut également ajouter une charge de dilution et éventuellement des produits auxiliaires. On poursuit le mélange jusqu'à ce qu'il soit homogène.

Les poudres mouillables obtenues en mettant en jeu la composition de l'invention ont une excellente stabilité au stockage.

Les exemples suivants sont donnés à titre indicatif et ne peuvent être considérés comme une limite du domaine et de l'esprit de l'invention.

EXEMPLE 1

Préparation des compositions tensio-actives de l'invention sous forme acide

Dans un réacteur muni d'un système d'agitation à hélice à régime turbulent, d'un système de refroidissement et d'un système de chauffage, on charge :

- 3 parties en moles de dérivé polyoxyalkyléné de formule III.

La température est portée à 37°C, puis on introduit sous agitation à régime turbulent en continu et à débit constant 1 partie en mole de $P_2O_5$.

La réaction étant exothermique, on maintient par refroidissement la température du milieu à 43°C ± 1°C jusqu'à la fin de l'introduction de $P_2O_5$.

L'introduction de $P_2O_5$ dure environ 1h 1/4.

En fin d'addition du $P_2O_5$ on laisse la réaction se poursuivre à la même température pendant 30 mn (étape de mûrissement) tout en continuant l'agitation.

Le produit ainsi obtenu est analysé par potentiométrie.

On peut ainsi mesurer le taux de diester, le taux de monoester, le restant étant principalement constitué par le dérivé de formule III.

EXEMPLE 2

Préparation des compositions tensio-actives de l'invention neutralisées par de la triéthanolamine ou de la potasse

Le produit obtenu à l'exemple 1 est neutralisé par de la triéthanolamine ou par de la potasse à 38 % jusqu'à obtenir un pH du milieu de 8 environ.

Pendant cette opération, le refroidissement est régulé pour que la température ne dépasse pas 45°C.

Dans les tableaux, les taux d'esters sont exprimés sous forme acide, c'est-à-dire avant neutralisation.

EXEMPLE 3

Préparation d'un "flowable"

On dissout 30 parties de composition tensio-active de l'invention dans 70 parties de monoéthylèneglycol, puis on ajoute 0,3 partie d'antimousse 416/R fabriqué par RHONE-POULENC et 393 parties d'eau.

On ajoute lentement sous agitation 400 parties de matière active.

L'agitation est maintenue pendant environ 3 mn pour obtenir un mélange homogène.

On obtient ainsi une prédispersion qui est ensuite broyée dans un "Mini Motor Mill" commercialisé par EIGER ENGINEERING Ltd ; la chambre de broyage est remplie par 59 g de billes de verre de 1 mm de diamètre, la rotation étant de 4 000 tours/mn. Le broyage est effectué pendant environ 4 mn, ce afin d'obtenir des particules de diamètre compris entre 2 et 6 microns.

Le mélange obtenu est laissé pendant 3 à 4 heures au repos (afin d'éliminer les bulles et les mousses présentes).

Le "flowable" obtenu est contrôlé :

- mesure de la consistance à la coupe FORD n° 4 (c F4)
- contrôle rhéologique et mesure de la viscosité plastique Bingham VB au Rhéomat 30 de la Société CONTRAVES ("Initiation à la Rhéologie" - Technique et Documentation Lavoisier - pages 55 et 56).

EXEMPLES 4 A 9

On prépare selon le mode opératoire de l'exemple 3 un "flowable" contenant :

- comme matière active de l'atrazine (chloroéthylaminobutylamino s-triazine)
- comme composition tensio-active, une composition préparée selon le mode opératoire de l'exemple 2 à partir de tri-(phényl-1 éthyl) phénol polyoxyalcoylénés

. dont la quantité de motifs oxyéthylénés (OE) + oxypropylénés (OP)

. et dont la proportion OE/OP

sont données au tableau I.

Les propriétés du "flowable" obtenu figurent au tableau I.

EXEMPLE 10

On répète l'opération décrite à l'exemple 4, en remplaçant l'atrazine par du diuron (dichlorophényldiméthyl urée).

Les propriétés du "flowable" obtenu figurent au tableau I.

EXEMPLE 11

On répète l'opération décrite à l'exemple 4, en remplaçant l'atrazine par du carbaryl (N- méthylcarbamate de naphtyle) et en mettant en oeuvre une composition tensio-active sous forme acide (c'est-à-dire préparée selon le mode opératoire de l'exemple 1) et non pas neutralisée.

Les propriétés du "flowable" obtenu figurent au tableau I.

EXEMPLES 12-14

On répète l'opération décrite aux exemples 4-6 en remplaçant la composition tensio-active par une composition préparée selon le mode opératoire de l'exemple 2 à partir d'un tri- (phényl-éthyl) phénol polyoxyalcoyléné de formule

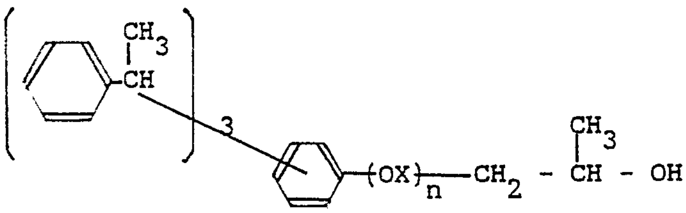

Les propriétés du "flowable" obtenu figurent au tableau II.

EXEMPLE 15

On répète l'opération décrite à l'exemple 4 en remplaçant la composition tensio-active par la même quantité de SOPROPHOR FL (commercialisé par RHONE-POULENC) constitué d'un mélange à base de mono- et di-esters phosporiques de tri-(phényl-1 éthyl) phénol polyoxyéthyléné contenant 16 0E, sous forme neutralisé.

Les propriétés du "flowable" obtenu figurent au tableau II.

EXEMPLE 16

On répète l'opération décrite à l'exemple 11 en remplaçant la composition tensio-active par la même quantité de SOPROPHOR 3 D 33 (commercialisé par RHONE-POULENC) constitué d'un mélange à base de mono- et di-esters phosphoriques de tri- (phényl-1 éthyl) phénol polyoxyéthyléné contenant 16 OE, sous forme acide.

EXEMPLE 17

On répète l'opération décrite à l'exemple 4 en remplaçant la composition tensio-active par une composition préparée selon le mode opératoire de l'exemple 2 à partir d'un nonylphénol polyoxyalcoyléné de formule

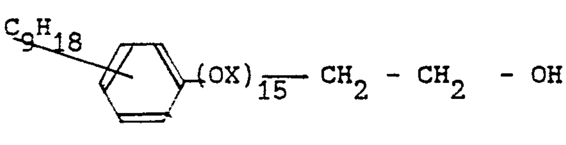

Les propriétés du "flowable" obtenu figurent au tableau II.

TABLEAU I

| EXEMPLE | 4 | 5 | 6 | 7 | 8 | 9 | 10 |
|---|---|---|---|---|---|---|---|
| matière active | ATR | ATR | ATR | ATR | ATR | ATR | DIU |
| OE + OP | 16 | 25 | 34 | 16 | 16 | 16 | 16 |
| OE / OP | 50/50 | 50/50 | 50/50 | 40/60 | 60/40 | 30/70 | 50/50 |
| diester % poids | 51,8 | 92,6 | 21,9 | 68,2 | 59,3 | 14,3 | 51,8 |
| monoester % en poids | 20,3 | 5,3 | 28,1 | 6,8 | 16,3 | 33,9 | 20,3 |
| c $F_4$ en s | 15 | 15 | 15 | 16 | 16 | - * | 14 |
| $V_B$ en mPa s | 13,5 | 14,6 | 12,2 | 16,7 | 14,9 | -* | 18 |

ATR : signifie "atrazine" DIU : signifie "Diuron" CAR : signifie "carbaryl"

*: ne passe pas au broyage

TABLEAU II

| EXEMPLE | 11 | 12 | 13 | 14 | 15 | 16 | 17 |
|---|---|---|---|---|---|---|---|
| matière active | CAR | ATR | ATR | ATR | ATR | CAR | ATR |
| OE + OP | 16 | 16 | 25 | 34 | - | - | 16 |
| OE / OP | 50/50 | 50/50 | 50/50 | 50/50 | - | - | 50/50 |
| diester % poids | 51,8 | 67,2 | 66,2 | 77,8 | | | 62,4 |
| monoester % en poids | 20,3 | 17,1 | 19,1 | 14,4 | | | 12,9 |
| c $F_4$ en s | 17 | 21 | 58 | -* | 18 | 22 | 14 |
| $V_B$ en mPa s | 22 | 28,6 | 56,9 | -* | 20 | 28 | 18,5 |

ATR : signifie "atrazine" DIU : signifie "Diuron" CAR : signifie "carbaryl"

* : ne passe pas au broyage

## Revendications

1/ Compositions tensio-actives à base d'esters phosphoriques de poly(phényl-1 éthyl) phénols polyoxyalcoylénés caractérisées en ce qu'elles sont constituées d'un mélange de mono- et de di-esters phosphoriques de poly (phényl-1 éthyl) phénols polyoxyalcoylénés et de poly (phényl-1 éthyl) phénols polyoxyalcoylénés, de formules I à III suivantes :

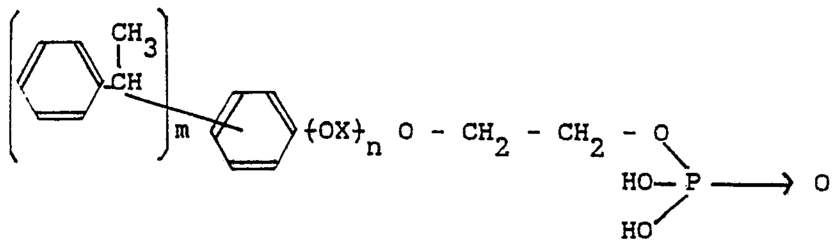
(I)

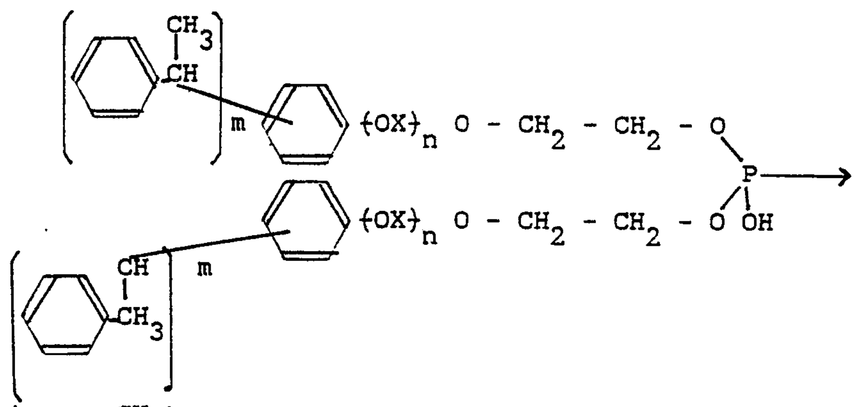
(II)

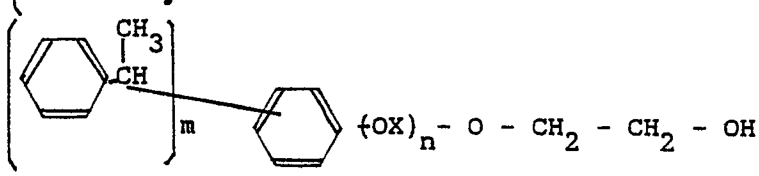
(III)

formules dans lesquelles :. m est égal à 2 ou 3 ;
. $(OX)_n$ représente une succession statistique de motifs oxyéthylénés et oxypropylénés ;
. n étant tel que le nombre total de motifs oxyalcoylénés du radical $+OX+_n$ O - $CH_2$ - $CH_2$ - soit de 14 à 35, avec un rapport nombre de motifs oxyéthylénés / nombre de motifs oxypropylénés allant de 40/60 à 70/30, lesdits esters de formules I et II se présentant sous forme acide ou neutralisée.

2/ Compositions tensio-actives selon la revendication 1 caractérisées en ce que le rapport nombre de motifs oxyéthylénés / nombre de motifs oxypropylénés va de 40/60 à 60/40.

3/ Compositions tensio-actives selon l'une quelconque des revendications précédentes caractérisées en ce que les quantités respectives des différents constituants correspondent à environ à :
- 0 à 70 % en poids de constituant de formule III
- un rapport pondéral diester de formule II / monoester de formule I allant de :
. 0 à 18, lorsque lesdits esters sont sous forme acide
. 0 à 10, lorsque lesdits esters sont sous forme neutralisée.

4/ Compositions tensio-actives selon l'une quelconque des revendications précédentes caractérisées en ce que :
. m est égal à 3
. n est égal à 16
. le rapport nombre de motifs oxyéthylénés / nombre de motifs oxypropylénés est de 50/50.

5/ Procédé de préparation de compositions tensio-actives par phosphatation d'au moins un poly (phényl-1 éthyl) phénol polyoxyalcoylené de formule

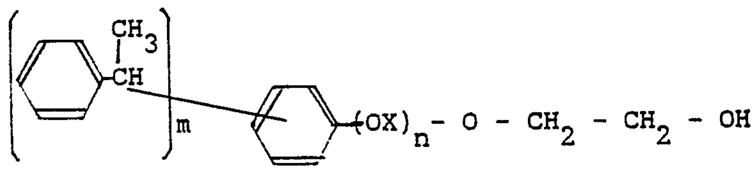 (III)

formule dans laquelle :
. m est égal à 2 ou 3 ;
. $(OX)_n$ représente une succéssion statistique de motifs oxyéthylénés et oxypropylénés ;
. n étant tel que le nombre total de motifs oxyalcoylénés du radical $(OX)_n O - CH_2 - CH_2$ - soit de 14 à 35, avec un rapport nombre de motifs oxyéthylénés / nombre de motifs oxypropylénés allant de 40/60 à 70/30

6/ Procédé selon la revendication 5 caractérisé en ce que le rapport nombre de motifs oxyéthylénés / nombre de motifs oxypropylénés va de 40/60 à 60/40.

7/ Procédé selon la revendication 5 ou 6 caractérisé en ce que
. m est égal à 3
. n est égal à 16
. le rapport nombre de motifs oxyéthylénés / nombre de motifs oxypropylénés est de 50/50.

8/ Procédé selon l'une quelconque des revendications 5 à 7 caractérisé en ce que l'opération de phosphatation est réalisée en deux étapes :
- une étape de phosphatation proprement dite réalisée par introduction en continu de l'anhydride phosphorique au sein d'un milieu soumis à un régime turbulent d'agitation, milieu constitué par ledit dérivé polyoxyalkyléné de formule III contenant de l'eau en quantité suffisante pour initier la réaction de phosphatation, à une température de l'ordre de 35-40° C en début de réaction, ladite température étant maintenue à une température inférieure ou égale à 45° C jusqu'en fin d'introduction de l'anhydride phosphorique, la quantité totale d'anhydride phosphorique mise en oeuvre correspondant à un rapport molaire dérivé polyoxyalkyléné / $P_2O_5$ égal à 3 $\pm$ 0,3
- suivie d'une étape de mûrissement du milieu réactionnel obtenu, réalisée en régime turbulent d'agitation à une température comprise entre 40 et 60° C.

9/ Utilisation des compositions tensio-actives faisant l'objet des revendications 1 à 4 à la formulation de matières actives phytosanitaires insolubles dans l'eau.

10/Utilisation selon la revendication 9 à la formulation de matières actives phytosanitaires insolubles dans l'eau, sous forme de dispersions aqueuses fluides.

11/Dispersions aqueuses fluides de matières phytosanitaires insolubles dans l'eau constituées de
- de 10 à 89 % en poids d'eau
- de 10 à 65 % en poids de matière(s) active(s)
- de 0,2 à 20 % en poids de composition tensio-active faisant l'objet de l'une des revendications 1 à 4
- de 0,8 à 20 % en poids d'anti-gel
- de 0 à 10 % en poids d'agent mouillant
- de 0 à 5 % en poids d'épaississant.

12/Utilisation selon la revendication 9 à la formulation de matières actives phytosanitaires sous forme de granulés.

13/Granulés constitués de :
- de 10 à 95 % en poids de matière(s) active(s) phytosanitaire(s)
- de 3 à 10 % en poids de composition tensio-active faisant l'objet de l'une des revendications 1 à 4
- de 2 à 10 % en poids de liant
- de 0 à 75 % en poids de charge(s)
- de 0 à 5 % en poids d'agent(s) mouillant(s)
- de 0 à 5 % en poids d'agent(s) désintégrant(s).

14/Utilisation selon la revendication 9 à la formulation de matières actives phytosanitaires sous forme de poudres mouillables.

15/Poudres mouillables constituées de :
- de 10 à 90 % en poids de matière(s) active(s) phytosanitaire(s)
- de 0,5 à 20 % en poids de la composition tensio-active faisant l'objet de l'une des revendications 1 à 4
- de 9,5 à 75 % en poids de charge(s)
- de 0 à 5 % en poids d'agent(s) mouillant(s)
- de 0 à 5 % en poids de produit(s) auxiliaire(s).

Office européen des brevets

# RAPPORT DE RECHERCHE EUROPEENNE

Numero de la demande

EP 89 40 1155

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
| --- | --- | --- | --- |
| X | EP-A-0 252 824 (RHONE-POULENC)<br>* Revendications 1-17 * | 1-15 | B 01 F 17/00<br>A 01 N 25/04<br>A 01 N 25/30<br>C 07 F 9/09 |
| A | EP-A-0 163 598 (CIBA-GEIGY)<br>* Revendications 1-15 * | 1,9-15 | |
| A | EP-A-0 118 759 (HOECHST)<br>* Revendications 1-11 * | 1-15 | |
| A | DE-A-2 053 356 (BASF)<br>* Revendication 1 * | 1 | |

| DOMAINES TECHNIQUES RECHERCHES (Int. Cl.4) |
| --- |
| B 01 F<br>A 01 N<br>C 07 F |

Le présent rapport a été établi pour toutes les revendications

| Lieu de la recherche | Date d'achèvement de la recherche | Examinateur |
| --- | --- | --- |
| LA HAYE | 25-07-1989 | ROTSAERT L.D.C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)